# EUROPÄISCHE PATENTANMELDUNG

(11) **EP 1 349 409 A1**
(43) Veröffentlichungstag der Anmeldung: **01.10.2003**
(21) Anmeldenummer: 02007172.6
(22) Anmeldetag: 28.03.2002
(51) Int. Cl.: H04Q 7/38

(54) **Dienstqualitätsmotivierter Zellwechsel in einem zellularen Funk-Kommunikationssystem**

(71) Anmelder: SIEMENS AKTIENGESELLSCHAFT, 80333 München (DE)
(72) Erfinder: Ball, Carsten, Dr., 81373 München (DE); Muellner, Robert, 81379 München (DE); Spring, Gustav, 1100 Wien (AT); Schäffer, Helmut, Dr., 81547 München (DE); Treml, Franz, 85221 Dachau (DE); Winkler, Hubert, 2732 Willendorf (AT)

(57) **Zusammenfassung**

Die Erfindung betrifft ein Verfahren zum Übertragen von Informationen in einem zellularen Funk-Kommunikationssystem bei Funkzellenwechsel, wobei mindestens eine Teilnehmerstation über mindestens eine erste Funkschnittstelle mit mindestens einer einer ersten Funkzelle zugeordneten Basisstation verbunden ist, wobei Anforderungen an die Übertragung der Informationen entsprechend angebotenen Diensten durch mindestens einen ersten Dienstparameter, z.B. Datendurchsatz oder Verzögerungszeit, charakterisiert werden, wobei die erste Funkschnittstelle durch mindestens einen ersten dem ersten Dienstparameter zugeordneten Schnittstellenparameter, z.B. Empfangspegel, Interferenzpegel oder Datenfehlerraten, der ersten Funkschnittstelle charakterisiert wird. Erfindungsgemäß wird mindestens eine Qualität des Dienstes basierend auf einem Vergleich zwischen dem ersten Dienstparameter und dem ersten Schnittstellenparameter der ersten Funkschnittstelle als Kriterium für ein Auslösen eines Funkzellenwechsels, d.h. eines Handovers, zu mindestens einer zweiten Funkzelle verwendet.

## Beschreibung

Die Erfindung betrifft ein Verfahren zum Übertragen von Informationen in einem zellularen Funk-Kommunikationssystem bei Funkzellenwechsel, nach dem Oberbegriff des Anspruchs 1.

In Funk-Kommunikationssystemen werden Informationen (beispielsweise Sprache, Bildinformation, Videoinformation, SMS [Short Message Service] oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen. Für das eingeführte GSM-Mobilfunksystem (Global System für Mobile Communication) werden beispielsweise Frequenzen bei 850, 900, 1800 und 1900 MHz genutzt.

Für zukünftige Mobilfunksysteme mit CDMA- oder TD/CDMA-Übertragungsverfahren, wie beispielsweise UMTS (Universal Mobile Telecommunication System) oder andere Systeme der 3. Generation, sind für die Funkschnittstelle Frequenzen im Frequenzband von ca. 2000 MHz vorgesehen.

Der Zugriff von Stationen auf das gemeinsame Übertragungsmedium wird bei diesen Funk-Kommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Stationen aufgeteilt werden. Dabei findet häufig (zum Beispiel bei GSM [Global System for Mobile Communications], TETRA [Terestrial Trunked Radio], DECT [Digital European Cordless Telephone], UMTS [Universal Mobile Telecommunication System]) eine Unterteilung des Übertragungsmediums in Frequenz- und/oder Zeitkanäle entsprechend der Funkschnittstelle statt. Auch Kombinationen mehrerer dieser Verfahren werden angewendet. Bei dezentral koordinierten Systemen wird anhand von Messungen über die Verwendbarkeit einer Funkschnittstelle entschieden. Entsprechend der Funkausbreitung, das heißt abhängig von der Funkfelddämpfung und/oder der zu tolerierenden Interferenz, ist eine Wiederverwendung der Ressource einer Funkschnittstelle in einem entsprechenden Abstand möglich. Die Ressource einer Funkschnittstelle kann hierbei zum Beispiel ein Zeitschlitz-Frequenz-Paar oder auch nur eines von beiden (Zeitschlitz oder Frequenz) sein.

Während beim GSM-Mobilfunksystem ursprünglich die Übertragung von Sprachinformationen im Vordergrund stand, werden im zunehmenden Maße z.B. durch GPRS (General Packet Radio System), EDGE (Enhanced Data Rates for GSM Evolution) auf der Basis des GSM-Mobilfunksystems und für zukünftige Systeme wie UMTS von Anfang an auch Paketdatendienste eingeplant. Verschiedene Dienste, wie zum Beispiel Videoübertragung, Internetdienste, Voicemail, E-Mail oder Kurzmitteilungsdienste sind dabei vorgesehen, die sehr unterschiedliche Anforde-rungen an das Verwalten und Steuern der über die Funk-schnittstelle übertragenen Daten (Ressourcen-Management) haben. Insbesondere sollen dabei dienstspezifische Anfor-derungen an Datendurchsatzraten und/oder Verzögerungs-zeiten für Paketdatendienste verwaltet bzw. gesteuert werden. Bei einer Paketdatenübertragung werden Datenpakete nicht verbindungsorientiert (CS, Circuit Switched), d. h. eine Funkschnittstelle ist ständig der Verbindung zugeordnet, sondern paketorientiert (PS, Packet Switched) vermittelt. Die Funkschnittstelle wird also erst zugeordnet, wenn tatsächlich ein Datenpaket übertragen wird. Bei paketorientierten Datenübertragungen können mehrere Teilnehmer einer Ressource zugeordnet werden, wobei unterschiedliche Teilnehmer abwechselnd Zugriff auf die Funkressource bekommen. Befindet sich beispielsweise ein Teilnehmer gerade in der Lesephase eines Internet-Dokumentes, so können die für diese Übertragung verwendeten Ressourcen auf der Funkschnittstelle dynamisch an andere Teilnehmer vergeben werden. Entsprechend diesen variablen Ausgestaltungen der Funkschnittstelle haben die Dienste differenzierte Anforderungen an die Funkschnittstelle. Diese Anforderungen werden durch Dienstparameter, die eben die geforderte Qualität der Dienste charakterisieren, beschrieben. Mit der Einführung der Qualität des Dienstes (QoS, Quality of Service) können für eine Verbindung bestimmte Qualitätskriterien gefordert werden, wie beispielsweise ein bestimmter mittlerer Datendurchsatz oder eine maximale Verzögerungszeit beim Datendurchsatz. Im folgenden beziehen sich Dienstparameter auf diese dienstspezifischen Kriterien, während die Qualität der physikalischen Übertragung wie Empfangspegel, Interferenzpegel oder Datenfehlerraten bei der Übertragung über die Funkschnittstelle als Schnittstellenparameter beschrieben werden.

Auch im Fall eines Funkzellenwechsels wird die Übertragen von Informationen in einem zellularen Funk-Kommunikationssystem, wobei mindestens eine Teilnehmerstation über mindestens eine erste Funkschnittstelle mit mindestens einer einer ersten Funkzelle zugeordneten Basisstation verbunden ist, derart bewerkstelligt, dass Anforderungen an die Übertragung der Informationen entsprechend angebotenen Diensten durch mindestens einen ersten Dienstparameter charakterisiert werden und die erste Funkschnittstelle durch mindestens einen ersten dem ersten Dienstparameter zugeordneten Schnittstellenparameter der ersten Funkschnittstelle charakterisiert wird.

In zukünftigen Funkkommunikationssystemen besteht nun die Notwendigkeit, eine effiziente Zuordnung zwischen Dienst und Funk-Schnittstelle, d.h. zwischen Dienstparameter und Schnittstellenparameter, zu gewährleisten, die durch das Ressourcen-Management geregelt wird.

Bei derzeitigen Funkkommunikationssystemen erfolgt die Zuordnung ohne Berücksichtigung der Dienstparameter, wodurch z.B. Anforderungen an die mittlere Datenrate oder die mittlere zeitliche Verzögerung nicht berücksichtigt werden.

Da die Funkkommunikationssysteme derzeit schon durch hohe zeitliche Schwankungen der Auslastung der Funkressourcen beeinflusst werden, bedeutet dies, dass in Zeiten hoher Auslasung die geforderten Kapazitäten in einer Zelle nicht bereit gestellt werden können. Bestimmte Dienste müssen somit zurückgewiesen oder können nur beschränkt über Ressourcen auf der Funkschnittstellen abgewickelt werden, wodurch die geforderte Qualität des Dienstes nicht erfüllt werden kann. Diese Situation hat einen dramatischen Einfluss auf die Zufriedenheit der Nutzer und auf die Effizienz des Funk-Kommunikationssystems, insbesondere in dem Fall, für den die Nachbarzelle Ressourcen zur Verfügung stellen könnte, die die geforderte Qualität des Dienstes erfüllen. Genau diese Situation kann aber häufig in Funkkommunikationssystemen auftreten.

Derzeit wird dieses Problem sowohl für leitungsvermittelteals auch paketorientierte Verbindungen derart gelöst, dass die Dienste auf eine Funkschnittstelle zu einer benachbarten Zelle ausweichen. Als Kriterium für einen lastbedingten Zellwechsel wird das Verhältnis aus momentan besetzten Funkressourcen zu tatsächlich vorhandenen Funkressourcen verwendet. Wird der Schwellwert über eine bestimmte Zeitperiode überschritten (z.B. 85% der Funkressourcen sind mehr als 5 Sekunden besetzt), so wird die Verbindung an eine benachbarte Funkzelle übergeben, deren Funkressourcen eine zusätzliche Verbindung zulassen. Anforderung bezüglich der Qualität der Dienste werden derzeit nicht für den Zellwechsel berücksichtigt, d.h. es erfolgt in heutigen Mobilfunknetzen kein Zellwechsel, falls beispielweise der geforderte mittlere Datendurchsatz nicht erfüllt werden kann. Als Kriterium für einen Zellwechsel dienen ausschließlich Parameter, die die physikalische Funkschnittstelle und die gesamte Verkehrslast der Funkzelle betreffen.

Der vorliegenden Erfindung liegt daher die Aufgabe zu Grunde, ein Verfahren der eingangs genannten Art aufzuzeigen, welches die Ressourcen der Funkschnittstelle basierend auf der Qualität der Dienste dynamisch an die Teilnehmerstationen vergibt.

Diese Aufgabe wird durch ein Verfahren mit den Merkmalen nach Anspruch 1 gelöst.

Ausgestaltungen und Weiterbildungen der Erfindung sind Gegenstand der Unteransprüche.

Erfindungsgemäß wird mindestens eine Qualität des Dienstes basierend auf einem Vergleich zwischen dem ersten Dienstparameter und dem ersten Schnittstellenparameter der ersten Funkschnittstelle als Kriterium für ein Auslösen eines Funkzellenwechsels zu mindestens einer zweiten Funkzelle verwendet.

Grundsätzlich können die erste und zweite Funkzelle einer identischen Basiststion (zwei Funkzellen einer Basisstation) oder verschiedenen Basistationen (eine Basistation mit jeweils mindestens einer Funkzelle)zugeordnet sein.

Durch den Vergleich zwischen dem ersten Dienstparameter und dem ersten Schnittstellenparameter der ersten Funkschnittstelle werden die unterschiedlichen Anforderungen der unterschiedlichen Dienste, wie Videoübertragung, Internetdienste, Sprachübertragung, E-Mail, oder Kurzmitteilungen als Kriterium für einen Wechsel der Funkzelle herangezogen. Bezogen auf das ISO/OSI-Referenzmodell bedeutet dies, dass Anforderungen der Applikationsschicht in die Planung der Funkressourcen der physikalischen Schicht mit einbezogen werden. Falls die Anforderungen der Applikationsschicht nicht erfüllt werden, wird ein Zellwechsel ausgelöst um so zu einer Funkressource zu wechseln, die die Anforderungen der Applikationsschicht bereitstellt. In Funk-Kommunikationssystemen, wie sie bisher realisiert sind, wurden für einen Zellwechsel ausschließlich die Radiobedingungen bzw. die Zelllast, d.h. die Eigenschaften der physikalischen Schicht, unabhängig der geforderten Qualität der Dienste einer individuellen Verbindung berücksichtigt. Die Anforderungen der einzelnen Dienste und damit der Applikationsschicht, wie Verzögerungszeit in der Übertragung, Vertrauenswürdigkeit der Übertragung, das Verhältnis aus übertragener Datenrate zu dem für die Verbindung geforderten mittleren Datendurchsatz wurden für einen Zellwechsel nicht in Betracht gezogen.

In Ausgestaltung der Erfindung wird für den Fall, dass der erste Schnittstellenparameter der ersten Funkschnittstelle die Anforderungen des ersten Dienstparameters nicht erfüllt, für die mindestens eine Teilnehmerstation ein Verbindungswechsel zu einer der mindestens einen zweiten Funkzelle zugeordneten Basisstation initiiert. Für den Fall, dass der erste Schnittstellenparameter der ersten Funkschnittstelle die Anorderungen des ersten Dienstparameters erfüllt, erfolgt für die mindestens eine Teilnehmerstation kein Verbindungswechsel. Basierend auf der Qualität des Dienstes als Kriterium für einen Zellwechsel wird somit ein Wechsel der Funkzelle eingeleitet, falls die Qualität des Dienstes die Anforderung des Dienstes nicht erfüllt. Ist die Qualität ausreichend, so erfolgt die Übertragung weiter über die bestehende Verbindung.

In Weiterbildung der Erfindung kann die mindestens eine Teilnehmerstation über mindestens eine zweite Funkschnittstelle mit einer der mindestens einen zweiten Funkzelle zugeordneten Basisstation verbunden werden, wobei die zweite Funkschnittstelle durch mindestens einen dem ersten Dienstparameter zugeordneten ersten Schnittstellenparameter der zweiten Funkschnittstelle charakterisiert wird und die Qualität des Dienstes für die zweite Funkschnittstelle durch einen Vergleich zwischen dem ersten Dienstparameter und dem ersten Schnittstellenparameter der zweiten Funkschnittstelle von weiteren Funkschnittstellen differenziert wird. Dadurch wird die Qualität des Dienstes von Funkschnittstellen zu benachbarten Funkzellen in Bezug auf die einzelnen Dienste überprüft und entsprechend ihrer Qualität eingestuft. Bei der Überprüfung werden jedoch nur Funkzellen in Betracht gezogen, für die eine Verbindung zwischen der Teilnehmerstation und den jeweiligen Funkzellen zugeordneten Basisstation hergestellt werden kann. Dies bedeutet, dass die physikalischen Voraussetzung für einen Verbindungsaufbau wie ausreichender Empfangspegel und maximaler Pfadverlust bzw. verfügbare Ressourcen mindestens gewährleistet sein müssen, bevor Parameter, die die Anforderungen des Dienstes charakterisieren, überprüft werden. Insbesondere soll gewährleistet sein, dass die physikalischen Voraussetzung der neuen Funkzelle, d.h. der zweiten Zelle, nicht schlechter sind als in der Ursprungszelle, d.h. der ersten Funkzelle.

Eine weitere Möglichkeit besteht darin, dass die mindestens eine Teilnehmerstation zusätzlich über mindestens eine dritte Funkschnittstelle mit einer einer mindestens dritten Funkzelle zugeordneten Basisstation verbunden werden kann, wobei die dritte Funkschnittstelle durch mindestens einen dem ersten Dienstparameter zugeordneten ersten Schnittstellenparameter der dritten Funkschnittstelle charakterisiert ist, wobei die Qualität des Dienstes für die zweite und dritte Funkschnittstelle basierend auf dem Vergleich des ersten Schnittstellenparameters mit dem ersten Dienstparameter identisch ist, so dass ein Vergleich mindestens eines weiteren Parametersatzes bestehend aus mindestens einem zweiten Dienstparameter und mindestens einem zugeordneten zweiten Schnittstellenparameter, die vorzugsweise ein Maß für die Funkfelddämpfung zwischen der mindestens einen Teilnehmerstationen und den jeweiligen Basisstationen angeben, eine Hierarchie der Qualität des Dienstes für die zweite und dritte Funkschnittstelle bestimmt. Dadurch wird neben der primären Charakterisierung des Dienstes durch einen ersten Dienstparameter ein weiterer Parameter zugelassen, der als Kriterium zur Charakterisierung der Verbindung herangezogen werden kann. Bevorzugt sind dies nun Parameter, die nicht die Dienste an sich charakterisieren, sondern vielmehr die physikalischen Eigenschaften der Funkschnittstelle betreffen. Ein Beispiel stellt etwa die Funkfelddämpfung der Funkschnittstellen zwischen den Teilnehmerstationen und den Basisstationen dar. Voraussetzung ist wieder, dass die Radiobedingungen, d.h. die physikalischen Eigenschaften der Funkschnittstelle, die Voraussetzungen für einen Verbindungsaufbau erfüllen, um so die Grundvoraussetzung für einen Zellwechsel zu erfüllen. Insbesondere sollte gewährleistet sein, dass die physikalischen Voraussetzung der neuen Zellen, d.h. der zweiten und dritten Zelle, nicht schlechter sind als in der Ursprungszelle, d.h. der ersten Funkzelle.

Besondere Vorteile ergeben sich dadurch, dass der mindestens einen Teilnehmerstation diejenige Funkzelle für einen Verbindungswechsel zugeordnet wird, deren Funkschnittstelle zwischen der der Funkzelle zugeordneten Basisstation und der mindestens einen Teilnehmerstation insgesamt zur größten Verbesserung der Qualität des Dienstes gegenüber der ersten Funkschnittstelle führt. Dies bedeutet, dass durch das erfindungsgemäße Verfahren eine Funkschnittstelle ausgewählt wird, die die Anforderungen des Dienstes erfüllt und somit zu einer Verbesserung der Übertagungsbedingungen gegenüber der Ursprungszelle führt. Sollte keine Funkschnittstelle zur Auswahl stehen, die die Anforderungen des Dienstes erfüllt, so wird auf diejenige Funkzelle ausgewichen, die die Anforderungen des Dienstes noch am besten erfüllt und zumindest besser ist als die Ursprungszelle, d.h. die erste Funkzelle.

Sind mindestens zwei Funkzellen zu einem Netzwerk zusammengefasst, welches von mindestens einem Netzwerk-Kontroller gesteuert wird, so wird der Verbindungswechsel und die Auswahl der Funkzellen erfindungsgemäß durch den mindestens einen Netzwerk-Kontroller initiiert und getroffen, indem der mindestens eine Netzwerk-Kontroller mindestens für die Teilnehmerstation, für die ein Wechsel der Funkzelle initiiert wurde, eine Liste der zugehörigen Dienstparameter und eine Liste der Funkzellen mit den entsprechenden Schnittstellenparametern umfasst und der Netzwerk-Kontroller basierend auf den Parameter-Listen eine Auswahl-Liste erstellt, die nach der Qualität der Dienste sortiert wird, und die Verbindungen im Netzwerk basierend auf dieser Auswahl-Liste zuweist. Dadurch ist es möglich, die Ressourcen bezüglich der Dienste nicht nur innerhalb einer Funkzelle bzw. Basisstation zu optimieren, sondern über das gesamte Netzwerk bzw. innerhalb eines Teilsystems, welches einem Netzwerk-Kontroller zugeordnet ist, hinweg.

In Weiterbildung der Erfindung werden die Verfahren zum Wechsel und zur Auswahl der Funkzellen zyklisch wiederholt. Dadurch ist es möglich die Qualität der Übertragung in festen zeitlichen Abständen zu überprüfen und ggf. durch einen Verbindungswechsel zu optimieren. Die Funkressourcen innerhalb eines Funk-Kommunikationssystems werden kontinuierlich den gegeben Anforderungen angepasst, insbesondere auch bezüglich der Anforderungen der Dienste.

Mit Vorteil ist der Wechsel der Funkzellen erst nach einer Schutzzeit umkehrbar. Dadurch wird die alternierende Zuweisung von Funkzellen, deren Schnittstellenparameter ähnlich sind und somit zu keiner signifikanten Verbesserung der Qualität der Dienste führen, vermieden (Vermeidung eines Ping-Pong Effektes). Auch der damit verbundene Signalisierungsaufwand wird somit minimiert.

Besondere Vorteile ergeben sich dadurch, dass die Dienst- und Schnittstellenparameter entweder ein Maß
- für den möglichen Informationsdurchsatz über die Funkschnittstelle,
- für die Verzögerung der Datenübertragung über die Funkschnittstelle sind,
- für die Funkfelddämpfung der Funkschnittstelle zwischen Teilnehmerstation und Basisstation und/oder
- für die verfügbaren Funkressourcen der Funkzelle.

Diese Parameter sind einerseits eng mit den Anforderungen der Dienste verbunden und spiegeln andererseits die mögliche Ausschöpfung der Ressourcen der Funkschnittstelle wider. Insbesondere die Kombination dieser Parameter ermöglicht eine detaillierte Spezifizierung der Funkschnittstelle.

Die Erfindung betrifft auch zellulare Funk-Kommunikationssysteme mit mindestens einer einer Funkzellen zugeordneten Basisstation und mindestens einer Teilnehmerstation, welche über mindestens eine Funk-Schnittstelle miteinander verbunden sind, welche die Durchführung der oben beschriebenen Verfahren gemäß der Erfindung ermöglichen.

Die Erfindung wird im Folgenden anhand eines Ausführungsbeispiels näher erläutert.

Bei GPRS bzw. EDGE sind mehrere Funkzellen zugeordnete Basisstationen BTS zu einem Basisstationteilsystem/Teilnetzwerk BSSᵢ zusammengefasst, wobei die Steuerung dieses Basisstationteilsystem/Teilnetzwerk BSS durch einen Basisstations-Kontroller BSC übernommen wird. Gegenüber der BTS ist die BSC für die Verwaltung der Funkschnittstellen via BTS zu den Teilnehmerstationen MSᵢ verantwortlich; dies bedeutet Reservierung und Freigabe von Funkschnittstellen sowie Handover-Management bzw. Management des Zellwechsels für paketorientierte Daten.

Darüberhinaus stellt die Paket-Kontroll-Einheit PCU für paketorientierte Dienste die Verbindung zwischen Basisstation BTS und SGSN dar und kann in dem Basisstations-Kontroller BSC integriert sein; es gibt aber auch Bestrebungen, die Paket-Kontroll-Einheit PCU künftig in die Basisstationen BTS selbst zu integrieren.

Eine Teilnehmerstation MS1 ist nun ein Kandidat, um von einer Funkzelle mit der Basisstation BTS1 zu einer anderen Funkzelle zu wechseln, wenn beispielsweise eines (oder auch mehrere) der folgenden Kriterien basierend auf den Dienst- und Schnittstellenparametern erfüllt ist:
- Datendurchsatz-Kriterium: Die tatsächlich Datenrate (Schnittstellenparameter) liegt unter dem Schwellwert der angefragten mittleren Datenrate (Dienstparameter),
- Zeitverzögerungs-Kriterium: Die tatsächliche Zeitverzögerung bei der Übertragung über die Funkschnittstelle (Schnittstellenparameter) liegt über der angefragten Zeitverzögerung (Dienstparameter),
- Funkfelddämpfungs-Kriterium: Die Funkfelddämpfung (Schnittstellenparameter) zwischen der Teilnehmerstation MS1 und der Basisstation BTS1 überschreitet die gesetzte Schwelle (Dienstparameter),
- Verkehrslast-Kriterium: Das Verhältnis der momentan belegten Funkressourcen/insgesamt verfügbaren Funkressourcen (Schnittstellenparameter) überschreitet einen Schwellwert (Dienstparameter).

Neben Datendurchsatz und Zeitverzögerung können beispielhaft auch Parameter wie Vertrauenswürdigkeit, Bit-Fehlerrate oder Block-Fehlerrate benutzt werden.

Für jeden Basisstations-Kontroller BSC wird nun eine Liste der Teilnehmerstationen MS generiert, die zum einen alle Teilnehmerstationen MSᵢ und zum anderen die dazugehörigen Dienstparameter enthält, sofern sie basierend auf den oben genannten Kriterien als Kandidaten für einen Zellwechsel identifiziert wurden. Des weiteren wird in dem Basisstations-Kontroller BSC eine Liste der Funkzellen verwaltet, die zum einen die Schnittstellenparameter der Funkschnittstellen zwischen den Teilnehmerstationen, die Kandidaten für einen Zellwechsel sind, und zum anderen alle Zellen des Teilnetzwerkes enthält.

Basierend auf diesen beiden Listen - Liste der Teilnehmerstationen und Liste der Funkzellen - wird eine Auswahl-Liste generiert, die eine Zuordnung der Teilnehmerstation zu der ihren Anforderungen am besten entsprechenden Funkzelle ermöglicht.

Im weiteren wird nun beispielsweise die Verbindung bzw. Funkschnittstelle zwischen der Teilnehmerstation MS1 und der der Funkzelle zugeordneten Basisstation BTS1 betrachtet, deren Datendurchsatz-Kriterium nicht erfüllt sein soll. In dem Basisstations-Kontroller BSC werden folgende Listen geführt:
- In einer Teilnehmerliste des Basisstations-Kontrollers BSC wird die Teilnehmerstation MS1 mit dem nötigen Datendurchsatz (Dienstparameter) aufgenommen.
- In einer Liste der Funkzellen werden alle Funkzellen mit Schnittstellenparametern, die auch den Schnittstellenparameter Datendurchsatz umfasst, aufgeführt.

Aus beiden Listen wird eine Auswahlliste erstellt, die die möglichen Basisstationen BTS nach der Qualität des Datendurchsatz sortiert.

Erfüllen nun die Funkschnittstellen zwischen der Teilnehmerstation MS1 und den den Funkzellen zugeordneten Basisstationen BTS2 bzw. BTS3 entsprechend der Auswahl-Liste das Datendurchsatz-Kriterium für den Dienst der Teilnehmerstation MS1, so wird diejenige Funkzelle mit der Basisstation BTS2 bzw. BTS3 ausgewählt, die als weiteres Kriterium die geringste Funkfelddämpfung auf der Funkschnittstelle zwischen Teilnehmerstation MS1 und den entsprechenden Basisstationen BTS2 bzw. BTS3 aufweist.

Erfüllen die Funkschnittstellen zwischen der Teilnehmerstation MS1 und den Funkzellen zugeordneten Basisstationen BTS2 bzw. BTS3 das Datendurchsatz-Kriterium für den Dienst der Teilnehmerstation MS1 nicht, aber der Datendurchsatz ist dennoch größer als für die Verbindung zwischen der Teilnehmerstation MS1 und der der ursprünglichen Funkzelle zugeordneten Basisstation BTS1, so wird diejenige Funkzelle ausgewählt, die den maximalen Datendurchsatz gewährleistet.

Sollten die Verbindungen zu den Basisstationen BTS2 und BTS3 den gleichen Datendurchsatz gewährleisten, so wird diejenige Funkzelle bzw. Basisstation ausgewählt, die die geringste Funkfelddämpfung auf der Funkschnittstelle zwischen Teilnehmerstation MS1 und der Basisstation BTS2 oder BTS3 aufweist.

Ist keine Funkschnittstelle vorhanden, die einen größeren Datendurchsatz als die Funkschnittstelle zwischen der Teilnehmerstation MS1 und der der Funkzelle zugeordneten Basisstaion BTS1 gewährleisten kann, so wird kein Verbindungswechsel ausgelöst.

## Patentansprüche

1. Verfahren zum Übertragen von Informationen in einem zellularen Funk-Kommunikationssystem bei Funkzellenwechsel, wobei mindestens eine Teilnehmerstation über mindestens eine erste Funkschnittstelle mit mindestens einer einer ersten Funkzelle zugeordneten Basisstation verbunden ist, wobei Anforderungen an die Übertragung der Informationen entsprechend angebotenen Diensten durch mindestens einen ersten Dienstparameter charakterisiert werden,
wobei die erste Funkschnittstelle durch mindestens einen ersten dem ersten Dienstparameter zugeordneten Schnittstellenparameter der ersten Funkschnittstelle charakterisiert wird,
**dadurch gekennzeichnet,**
**dass** mindestens eine Qualität des Dienstes basierend auf einem Vergleich zwischen dem ersten Dienstparameter und dem ersten Schnittstellenparameter der ersten Funkschnittstelle als Kriterium für ein Auslösen eines Funkzellenwechsels zu mindestens einer zweiten Funkzelle verwendet wird.

2. Verfahren nach Anspruch 1, **dadurch gekennzeichnet, dass** für den Fall, dass der erste Schnittstellenparameter der ersten Funkschnittstelle die Anforderungen des ersten Dienstparameters nicht erfüllt, für die mindestens eine Teilnehmerstation ein Verbindungswechsel zu einer der mindestens einen zweiten Funkzelle zugeordneten Basisstation initiiert wird, oder dass für den Fall, dass der erste Schnittstellenparameter der ersten Funkschnittstelle die Anforderungen des ersten Dienstparameters erfüllt, für die mindestens eine Teilnehmerstation kein Verbindungswechsel erfolgt.

3. Verfahren nach Anspruch 2, durch **gekennzeichnet**, dass die mindestens eine Teilnehmerstation über mindestens eine zweite Funkschnittstelle mit einer der mindestens einen zweiten Funkzelle zugeordneten Basisstation verbunden wird,
dass die zweite Funkschnittstelle durch mindestens einen dem ersten Dienstparameter zugeordneten ersten Schnittstellenparameter der zweiten Funkschnittstelle charakterisiert wird und
dass die Qualität des Dienstes für die zweite Funkschnittstelle durch einen Vergleich zwischen dem ersten Dienstparameter und dem ersten Schnittstellenparameter der zweiten Funkschnittstelle von weiteren Funkschnittstellen differenziert wird.

4. Verfahren nach Anspruch 3, **dadurch gekennzeichnet, dass** die mindestens eine Teilnehmerstation zusätzlich über mindestens eine dritte Funkschnittstelle mit einer einer mindestens dritten Funkzelle zugeordneten Basisstation verbunden werden kann, wobei die dritte Funkschnittstelle durch mindestens einen dem ersten Dienstparameter zugeordneten ersten Schnittstellenparameter der dritten Funkschnittstelle charakterisiert ist, wobei die Qualität des Dienstes für die zweite und dritte Funkschnittstelle basierend auf dem Vergleich des ersten Schnittstellenparameters mit dem ersten Dienstparameter im wesentlichen identisch ist,
so dass ein Vergleich mindestens eines weiteren Parametersatzes bestehend aus mindestens einem zweiten Dienstparameter und mindestens einem zugeordneten zweiten Schnittstellenparameter, die vorzugsweise ein Maß für die Funkfelddämpfung zwischen der mindestens einen Teilnehmerstationen und den jeweiligen Basisstationen angeben, eine Hierarchie der Qualität des Dienstes für die zweite und dritte Funkschnittstelle bestimmt.

5. Verfahren nach Anspruch 3 oder 4, **dadurch gekennzeichnet, dass** der mindestens einen Teilnehmerstation diejenige Funkzelle für einen Verbindungswechsel zugeordnet wird, deren Funkschnittstelle zwischen der der Funkzelle zugeordneten Basisstation und der mindestens einen Teilnehmerstation insgesamt zur größten Verbesserung der Qualität des Dienstes gegenüber der ersten Funkschnittstelle führt.

6. Verfahren nach Anspruch 5, wobei die Funkzellen zu einem Netzwerk zusammengefasst sind, welches von mindestens einem Netzwerk-Kontroller gesteuert wird, **dadurch gekennzeichnet, dass** der Verbindungswechsel und die Auswahl der Funkzellen durch den mindestens einen Netzwerk-Kontroller initiiert und getroffen wird, indem der mindestens eine Netzwerk-Kontroller mindestens für die Teilnehmerstation, für die ein Wechsel der Funkzelle initiiert wurde, eine Liste der zugehörigen Dienstparameter und eine Liste der Funkzellen mit den entsprechenden Schnittstellenparametern umfasst und der Netzwerk-Kontroller basierend auf den Parameter-Listen eine Auswahl-Liste erstellt, die nach der Qualität der Dienste sortiert wird, und die Verbindungen im Netzwerk basierend auf dieser Auswahl-Liste zuweist.

7. Verfahren nach einem der vorhergehenden Ansprüche, **dadurch gekennzeichnet, dass** die Verfahren zum Wechsel und zur Auswahl der Funkzellen zyklisch wiederholt werden.

8. Verfahren nach Anspruch 7, **dadurch gekennzeichnet, dass** der Wechsel der Funkzellen erst nach einer Schutzzeit umkehrbar ist.

9. Verfahren nach einem der vorhergehenden Ansprüche, **dadurch gekennzeichnet, dass** die Dienst- und Schnittstellenparameter ein Maß für den möglichen Informationsdurchsatz über die Funkschnittstelle sind.

10. Verfahren nach einem der vorhergehenden Ansprüche, **dadurch gekennzeichnet, dass** die Dienst- und Schnittstellenparameter ein Maß für Verzögerung der Datenübertragung über die Funkschnittstelle sind.

11. Verfahren nach einem der vorhergehenden Ansprüche, **dadurch gekennzeichnet, dass** die Dienst- und Schnittstellenparameter ein Maß für die Funkfelddämpfung der Funkschnittstelle zwischen Teilnehmerstation und Basisstation sind.

12. Verfahren nach einem der vorhergehenden Ansprüche, **dadurch gekennzeichnet, dass** die Dienst- und Schnittstellenparameter ein Maß für die verfügbaren Funkressourcen der Funkzelle sind.

13. Zellulares Funk-Kommunikationssystem mit mindestens einer einer Funkzelle zugeordneten Basisstation und mindestens einer Teilnehmerstation, welche über mindestens eine Funk-Schnittstelle miteinander verbunden sind, zur Durchführung eines Verfahrens nach einem der vorangegangen Ansprüche.
